# FASCICULE DE BREVET EUROPEEN

(11) **EP 3 667 201 B1**
(45) Date de publication et mention de la délivrance du brevet: **03.05.2023**
(21) Numéro de dépôt: 19216234.5
(22) Date de dépôt: 13.12.2019
(51) Int. Cl.: F25B 25/02, F25B 27/00, F25B 27/02, F25B 40/04, F28D 20/02, F28D 1/02

(54) **SYSTÈME DE PRODUCTION DE FROID COMPRENANT UNE MACHINE À COMPRESSION, UNE MACHINE À ABSORPTION ET UN SYSTÈME DE STOCKAGE THERMIQUE ASSURANT LEUR COUPLAGE**
KÄLTEERZEUGUNGSSYSTEM, DAS MIT EINER KOMPRESSIONSMASCHINE, EINER ABSORPTIONSMASCHINE UND EINEM THERMISCHEN SPEICHERSYSTEM ZUR VERBINDUNG DER BEIDEN AUSGESTATTET IST
SYSTEM FOR PRODUCING COLD COMPRISING A COMPRESSION MACHINE, AN ABSORPTION MACHINE AND A THERMAL STORAGE SYSTEM FOR COUPLING THEM

(30) Priorité: 13.12.2018 FR 1872829
(43) Date de publication de la demande: 17.06.2020
(73) Titulaire: Commissariat à l'Energie Atomique et aux Energies Alternatives, 75015 Paris (FR)
(72) Inventeur: MONTZIEUX, Guillaume, 38054 Grenoble Cedex 09 (FR); GARCIA, Pierre, 38054 Grenoble Cedex 09 (FR); PHAN, Hai Trieu, 38054 Grenoble Cedex 09 (FR)
(74) Mandataire: Brizio Delaporte, Allison

(56) Documents cités:
- EP-A1- 0 156 702
- EP-A2- 2 381 193
- WO-A1-2013/165535
- WO-A1-2016/033142
- CN-A- 104 457 019
- FR-A1- 2 683 301
- FR-A1- 2 963 415
- JP-A- H1 114 185
- JP-A- 2003 207 224
- JP-A- 2004 340 424

## Description

### DOMAINE TECHNIQUE

La présente invention concerne un système et un procédé de production de froid faisant partie du domaine de la co-production de froid par une machine à compression mécanique et une machine à absorption. En particulier, la machine à absorption utilise la chaleur fatale de la machine à compression au travers d'un système de stockage thermique.

Elle trouve une application particulièrement avantageuse dans des applications telles que la réfrigération, par exemple dans le domaine de l'agroalimentaire ou la climatisation, par exemple pour l'habitation.

### ÉTAT DE LA TECHNIQUE

La production de froid est un domaine en développement constant. On connait des machines de production de froid par compression mécanique alimentées par une énergie électrique. Ces machines produisent du froid au niveau d'un évaporateur par évaporation d'un fluide frigorigène qui circule et qui refroidit par exemple de l'air en captant ses calories. Entre le compresseur mécanique et l'évaporateur, le fluide frigorigène est condensé dans un condenseur et cède son énergie au milieu ambiant sous forme de chaleur. La machine à compression peut comprendre un récupérateur de chaleur agencé en amont du condenseur permettant de récupérer la chaleur fatale et de s'en servir dans d'autres systèmes tels que le préchauffage de l'eau d'un chauffe-eau pour l'eau chaude sanitaire ou le chauffage. Bien que les machines de production de froid par compression mécanique permettent une production de froid rapide, la fourniture d'énergie électrique et les pertes de chaleur fatale ne rendent pas cette solution optimale. La présence de récupérateur de chaleur sur ce type de machine nécessite d'utiliser la chaleur fatale dans des applications de chauffage qui sont donc parfois contradictoire avec le moment où la machine de production de froid est utilisée.

Les documents JP H11 14185 A, FR 2 683 301 A1, JP 2003 207224 A, et CN 104 457 019 A montrent des systèmes où une machine à compression mécanique et une machine à absorption sont couplées.

Il existe donc le besoin de proposer un système de production de froid qui soit optimisé pour la production de froid.

### RÉSUMÉ

Pour atteindre cet objectif, la présente invention concerne un système de production de froid comme défini par la revendication indépendante 1.

Ainsi, un système selon l'invention comprend entre autres un système de stockage thermique destiné à coupler la machine à absorption et la machine à compression.

L'invention permet d'optimiser la production de froid en utilisant la chaleur fatale de la machine à compression au niveau d'un générateur d'une machine à absorption par l'intermédiaire d'un système de stockage thermique.

La machine à compression mécanique et la machine à absorption oeuvrent dans le même objectif à savoir la production de froid. La machine à absorption va augmenter la production de froid sans augmentation notable de la consommation d'énergie électrique. La performance de production de froid est augmentée par exemple de l'ordre de 5 à 10%. La machine à compression permet de répondre rapidement au besoin de froid et la machine à absorption permet ensuite de venir en complément de la production de froid. La présence du système de stockage thermique permet d'assurer un déphasage entre la production de chaleur fatale par la machine à compression et son utilisation par la machine à absorption. Le système de stockage est configuré pour stocker l'énergie thermique c'est à dire emmagasiner, conserver pour une utilisation ultérieure.

Un autre aspect de la présente invention concerne un procédé de production de froid par un système selon l'invention comprenant une production de froid par la machine à compression, une production de chaleur fatale par la machine à compression, caractérisé en ce qu'il comprend un stockage de la chaleur fatale de la machine à compression par un module de stockage thermique et une production de froid par la machine à absorption par déstockage du module de stockage thermique stockant la chaleur fatale de la machine à compression vers le générateur de la machine à absorption.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par le dessin d'accompagnement suivant :

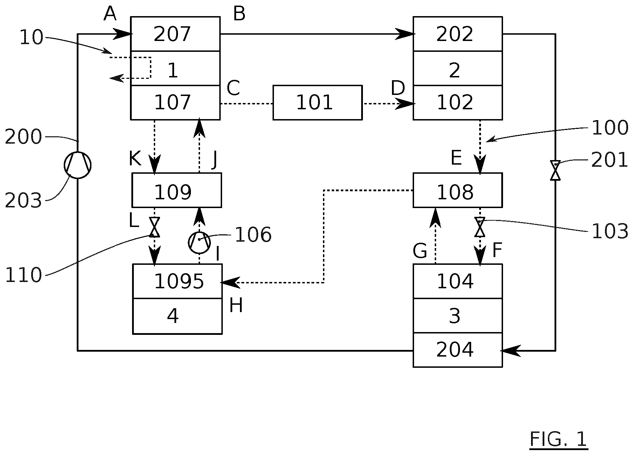

La figure 1 illustre un schéma d'un système de production de froid selon l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- Avantageusement, le système de stockage thermique comprend, dans un aspect additionnel, un deuxième module de stockage thermique 3 comprenant un volume de stockage apte à recevoir et à stocker un matériau de stockage thermique agencé entre l'évaporateur 104 de la machine à absorption et l'évaporateur 204 de la machine à compression mécanique de sorte à mutualiser au moins partiellement le stockage de froid. Cela permet avantageusement de mutualiser le module de stockage thermique entre les deux machines de production de froid. Le module de stockage thermique peut ainsi stocker le froid produit à la fois par la machine à absorption et la machine à compression rendant le système plus compact.
- Avantageusement, le fluide réfrigérant est distinct de la solution de travail, le circuit de circulation fluidique d'absorption 100 et le circuit de circulation fluidique de compression 200 sont des circuits fermés distincts. Cela permet un découplage des deux machines et un fonctionnement du système plus flexible.
- Avantageusement, le système de stockage thermique comprend, dans un aspect additionnel, un autre module de stockage thermique 2 comprenant un volume de stockage apte à recevoir et à stocker un matériau de stockage thermique agencé entre le condenseur 102 de la machine à absorption et le condenseur 202 de la machine à compression.
- Avantageusement, le système de stockage thermique comprend, dans un aspect additionnel, un autre module de stockage thermique 4 comprenant un volume de stockage apte à recevoir et à stocker un matériau de stockage thermique agencé au niveau de l'absorbeur 105 de la machine à absorption.

Les stockages thermiques au niveau des condenseurs et/ou au niveau de l'absorbeur de la machine à absorption permettent de réguler les surplus d'énergie pour maintenir un point de fonctionnement stable de la machine à compression et/ou de la machine à absorption.

La mutualisation du stockage thermique au niveau des condenseurs assure une meilleure compacité du système.
- Avantageusement, au moins un module de stockage thermique 1, 2, 3, 4 est un stockage par matériau à changement de phase. Avantageusement, au moins un module de stockage thermique 1, 2, 3, 4 comprend un matériau à changement de phase. Le stockage d'énergie ce fait par stockage latent qui présente une densité énergétique plus élevée que celle des systèmes de stockage par chaleur sensible, ce qui confère aux systèmes de stockage par chaleur latente une plus grande compacité et des pertes thermiques moindres.
- Avantageusement, les modules de stockage thermique 1, 2, 3, 4 sont distincts.
- Avantageusement, le système comprend une source de chaleur complémentaire 10 fournissant au moins partiellement de l'énergie thermique au premier module de stockage 1. L'apport d'énergie thermique par une source de chaleur complémentaire permet de compléter voire remplacer selon les cas l'alimentation en calories du générateur de la machine à absorption.
- Avantageusement, la source de chaleur complémentaire 10 est une source solaire ou une source de chaleur fatale.
- Avantageusement, le module de stockage thermique 1, 2, 3, 4, comprend un premier échangeur thermique agencé dans le volume de stockage est destiné à recevoir le fluide frigorigène ou la solution de travail de la machine à absorption.
- Avantageusement, le module de stockage thermique 1, 2, 3, 4 comprend un deuxième échangeur thermique agencé dans le volume de stockage est destiné à recevoir le fluide réfrigérant de la machine à compression.
- le module de stockage thermique 1 comprend un échangeur thermique complémentaire agencé dans le volume de stockage est destiné à recevoir la source de chaleur complémentaire.
- Avantageusement, le module de stockage thermique 1, 2, 3, 4 comprend un premier circuit de transfert agencé entre le générateur 107, l'évaporateur 104, le condenseur 102 ou l'absorbeur 105 de la machine à absorption et le volume de stockage thermique.
- Avantageusement, le module de stockage thermique 1, 2, 3, 4 comprend un deuxième circuit de transfert agencé entre le récupérateur thermique 207, l'évaporateur 204, le condenseur 202 de la machine à compression et le volume de stockage.
- Avantageusement, le procédé de production de froid comprend un stockage mutualisé de la production de froid de la machine à compression et de la production de froid de la machine à absorption par un module de stockage thermique 3.

L'usage de l'article indéfini " un " ou " une " pour un élément ou une étape n'exclut pas, sauf mention contraire, la présence d'une pluralité de tels éléments ou étapes.

Dans la présente description, l'expression « A fluidiquement raccordé à B» est synonyme de" A est en connexion fluidique avec B" ne signifie pas nécessairement qu'il n'existe pas d'organe entre A et B. Les expressions "agencée sur" ou "sur" sont synonymes de "raccordé fluidiquement à".

L'amont et l'aval en un point donné sont pris en référence au sens de circulation du fluide dans le circuit.

Généralement, la production de froid peut être réalisée par une machine frigorifique à compression mécanique. Selon l'invention, la production de froid est assurée par une machine frigorifique à compression mécanique couplée par un système de stockage thermique à une machine à absorption. Selon l'invention, la machine à compression mécanique permet de produire du froid et constitue une source de chaleur pour la machine à absorption. La machine à compression est couplée à la machine à absorption par un système de stockage thermique.

Le système de stockage thermique comprend au moins un module de stockage thermique 1. Le module de stockage thermique est agencé à l'interface entre la machine à compression et la machine à absorption et plus spécifiquement entre le générateur 107 de la machine à absorption et le récupérateur de chaleur 207 de la machine à compression. Le module de stockage thermique comprend un matériau de stockage thermique. Le matériau de stockage thermique est configuré pour être stocké dans le module de stockage, plus précisément dans un volume de stockage. Le matériau de stockage thermique est destiné à être contenu dans le volume de stockage. Le matériau de stockage thermique est conservé dans le volume de stockage. Le matériau de stockage n'est pas destiné à être évacué ou en circulation en dehors du volume de stockage. Le module de stockage thermique comprend une cuve constituant le volume de stockage. Selon une possibilité préférée, le matériau de stockage est un matériau à changement de phase ou MCP.

Selon une variante, le module de stockage comprend au moins un échangeur thermique agencé dans le volume de stockage et avantageusement plongeant dans le matériau de stockage. L'échangeur thermique par exemple la forme d'un ou plusieurs tubes, lisse ou à ailettes. L'échangeur thermique est configuré pour recevoir un fluide. Préférentiellement, le module de stockage comprend au moins un premier échangeur thermique apte à recevoir la solution de travail ou le fluide frigorigène de la machine à absorption. Selon une possibilité préféré, le module de stockage comprend au moins un deuxième échangeur thermique apte à recevoir le fluide réfrigérant de la machine à compression. Selon une possibilité, le module de stockage comprend un autre échangeur thermique complémentaire destiné à recevoir un fluide d'une source complémentaire de chaleur.

Selon une variante pour assurer le transfert thermique entre le générateur 107 et le module de stockage et entre le récupérateur 207 et le module de stockage thermique, le module de stockage thermique comprend avantageusement un premier circuit de transfert thermique assurant l'échange thermique entre le générateur 107 et le volume de stockage et avantageusement un deuxième circuit de transfert assurant l'échange thermique entre le volume de stockage et le récupérateur 107. Selon une possibilité, et additionnellement à la configuration selon la revendication indépendante 1, un circuit de transfert est un circuit agencé entre la machine à absorption ou la machine à compression, plus précisément entre un élément tel qu'un échangeur de la machine à absorption ou de la machine à compression, et le volume de stockage. Le circuit de transfert est apte à recevoir un fluide de transfert c'est à dire soit un fluide caloporteur soit un fluide frigorigène. Au niveau de la machine à absorption ou de la machine à compression, le circuit de transfert est préférentiellement configuré pour échanger dans un échangeur de ladite machine telle que par exemple le générateur 107, préférentiellement l'échange thermique est indirect, sans contact. Selon une possibilité, au niveau du volume de stockage, le circuit de transfert est configuré pour assurer un échange thermique entre le fluide de transfert et le matériau de stockage par contact indirecte. Le circuit de transfert comprend selon cette possibilité une portion, appelée échangeur, plongeant dans le matériau de stockage thermique contenu dans le volume de stockage. Le circuit de transfert au niveau du volume de stockage prend la forme d'un ou plusieurs tubes, lisse ou à ailettes.

Le système selon la présente invention comprend une machine à compression. Une machine à compression mécanique comprend aux moins quatre composants dont un évaporateur 204, un condenseur 202, un compresseur 203 et un détendeur 201. Selon l'invention, la machine à compression comprend également un récupérateur de chaleur 207. Les différents composants de la machine à compression sont connectés fluidiquement, c'est à dire directement, sans organe notamment des vannes ou indirectement avec organe intermédiaire, par un circuit de fluidique de compression 200. Le circuit fluidique 200 est destiné à recevoir un fluide réfrigérant. À titre d'exemple préféré, le fluide réfrigérant appartenant à la famille des fluides inorganiques tels que NH₃, CO₂ ou encore à la famille des hydrofluoro-oléfines (HFO), dit de quatrième génération, tel que par exemple R-1234yf.

Les différents composants d'une machine à compression mécanique sont ci-après décrits.

Le compresseur 203 est destiné à comprimer le fluide réfrigérant ce qui provoque une augmentation de la température du fluide réfrigérant. Le compresseur 203 aspire le fluide réfrigérant à basse pression et à basse température. L'énergie mécanique apportée par le compresseur 203 va permettre d'élever la pression et la température du fluide réfrigérant à l'état gazeux. Une augmentation d'enthalpie en résultera. Le fluide réfrigérant sort du compresseur 203 à l'état gazeux. Le compresseur 203 est alimenté par un moteur pouvant être lui-même alimenté par diverses sources notamment électrique. Le compresseur 203 est connecté fluidiquement à l'évaporateur 204 et au condenseur 202. Le compresseur 203 comprend une connexion fluidique avec l'évaporateur 204 permettant l'entrée du fluide réfrigérant à l'état de gaz à basse température et basse pression dans le compresseur 203, préférentiellement directement. Le compresseur 203 comprend une connexion fluidique avec le condenseur 202 permettant la sortie du fluide réfrigérant à l'état de gaz à haute température et haute pression du compresseur 203, selon l'invention indirectement par l'intermédiaire d'un récupérateur de chaleur 207. Le compresseur 203 est connecté fluidiquement au récupérateur de chaleur 207.

Le récupérateur de chaleur 207 est un échangeur de chaleur dans lequel le fluide frigorigène pénètre à l'état chaud provenant du compresseur 203. Le récupérateur de chaleur 207 est avantageusement couplé à un module de stockage thermique 1 de sorte que de préférence l'échange de chaleur se fait du fluide frigorigène vers un matériau de stockage thermique destiné à être stocké dans un volume de stockage thermique tel une cuve de stockage thermique. Le récupérateur de chaleur 207 permet d'utiliser les calories du fluide frigorigène issu du compresseur 203 pour les stocker. Le récupérateur de chaleur 203 est destiné à récupérer la chaleur fatale du fluide frigorigène issue du compresseur 203. C'est à dire la chaleur résiduelle non utilisée par le condenseur 202 suivant. Le stockage des calories permet une utilisation différée de celles-ci et de manière caractéristique selon l'invention par la machine à absorption et en particulier par le générateur 107. Le récupérateur de chaleur 207 et le module de stockage thermique 1, ainsi que par exemple le débit du fluide frigorigène dans le récupérateur de chaleur 207, sont dimensionnés pour maintenir le fluide frigorigène à l'état de vapeur de sorte que celui-ci soit condensé dans le condenseur 202. Le récupérateur de chaleur 207 comprend une connexion fluidique avec le condenseur 202 permettant la sortie du fluide réfrigérant à l'état de gaz à haute température et haute pression du récupérateur de chaleur 207.

Le condenseur 202 est destiné à condenser le fluide réfrigérant à l'état de gaz chaud provenant du récupérateur de chaleur 207, avantageusement par échange thermique avec une source de chaleur également dénommée source de refroidissement. Le fluide réfrigérant à l'état de gaz va céder sa chaleur à une source de refroidissement tel qu'un fluide extérieur comme par exemple un flux d'air circulant. Selon un mode de réalisation, la source de refroidissement est au moins partiellement, préférentiellement uniquement, un matériau de stockage thermique d'un module de stockage thermique 2 destiné à être stocké dans une cuve de stockage thermique.

Le fluide réfrigérant sort du condenseur 202 à l'état liquide. Le condenseur 202 est connecté fluidiquement au récupérateur de chaleur 207 et au détendeur 201. Le condenseur 202 comprend une connexion fluidique avec récupérateur de chaleur 207 permettant l'entrée du fluide réfrigérant à l'état de gaz à haute température et haute pression dans le condenseur 202, préférentiellement directement. Le condenseur 202 comprend une connexion fluidique avec le détendeur 201 permettant la sortie du fluide réfrigérant à l'état de liquide du condenseur 202, préférentiellement directement.

Le détendeur 201 est destiné à détendre le fluide réfrigérant à l'état liquide. Le détendeur 201 abaisse la pression du fluide réfrigérant provoquant une baisse de sa température. Le fluide réfrigérant sort du détendeur 201 partiellement à l'état gazeux. Le détendeur 201 est connecté fluidiquement au condenseur 202 et à l'évaporateur 204. Le détendeur 201 comprend une connexion fluidique avec le condenseur 202 permettant l'entrée du fluide réfrigérant à l'état de liquide à haute pression dans le détendeur 201, préférentiellement directement. Le détendeur 201 comprend une connexion fluidique avec l'évaporateur 204 permettant la sortie du fluide réfrigérant à l'état partiellement gazeux du détendeur 201, préférentiellement directement.

L'évaporateur 204 est destiné à vaporiser le fluide réfrigérant. Le fluide réfrigérant à l'état liquide s'évapore en absorbant la chaleur d'une source de chaleur à refroidir telle qu'un fluide extérieur. La production de froid se fait à ce niveau.

Selon un mode de réalisation, la source de chaleur à refroidir est au moins partiellement, un matériau de stockage thermique d'un module de stockage thermique 3 destiné à être stocké dans une cuve de stockage thermique. La production de froid permet de refroidir de manière alternative ou cumulative un fluide circulant destiné à être directement utilisé comme un flux d'air refroidi ou bien un flux de fluide par exemple de l'eau et/ou le matériau de stockage pour stockage du froid produit. Le fluide réfrigérant sort de l'évaporateur 204 à l'état gazeux. L'évaporateur 204 est connecté fluidiquement au détendeur 201 et au compresseur 203. L'évaporateur 204 comprend une connexion fluidique avec le détendeur 201 permettant l'entrée du fluide réfrigérant à l'état liquide partiellement gazeux dans l'évaporateur 204, préférentiellement directement. L'évaporateur 204 comprend une connexion fluidique avec le compresseur 203 permettant la sortie du fluide réfrigérant à l'état de gazeux de l'évaporateur 204, préférentiellement directement.

Le circuit fluidique 200 est un circuit fermé, le fluide réfrigérant évolue sous l'action du compresseur 203 dans les éléments constituant la machine à compression.

Une machine à absorption est une pompe à chaleur à absorption thermique utilisant des couples réfrigérant/sorbant présentant de fortes affinités. Cette solution présente de faibles consommations électriques, l'énergie principale étant issue d'une source thermique, permettant de limiter le coût de fonctionnement dans le cas de la valorisation d'une source d'énergie à bas coût ou de chaleur fatale. De plus, les fluides frigorigènes utilisés dans les dispositifs à absorption ne présentent aucun ou de faible impact environnemental : ni sur le réchauffement climatique (GWP pour Global warning potential = 0), ni sur la couche d'ozone (ODP pour Ozone depletion potential = 0).

Ce type de dispositif fonctionne grâce à la faculté de certains liquides d'absorber (réaction exothermique) et de désorber (réaction endothermique) une vapeur. Elles utilisent également le fait que la solubilité de cette vapeur dans le liquide dépende de la température et de la pression. Ainsi, ces dispositifs utilisent comme fluide de travail un mélange binaire, dont l'un des composants est plus volatil que l'autre, et constitue le fluide frigorigène.

Une machine à absorption comprend donc quatre échangeurs principaux (générateur 107, absorbeur 105, condenseur 102 et évaporateur 104), et avantageusement de un à trois échangeurs secondaires. Le rôle des trois échangeurs secondaires est d'améliorer les performances de la machine telles que : un rectifieur 101, un économiseur 109, un sous-refroidisseur 108. Un rectifieur 101 peut être ajouté entre le générateur 107 et le condenseur 106 et/ou un sous-refroidisseur 108 entre le condenseur 106 et l'évaporateur 108 et/ou un économiseur 109 entre l'absorbeur 105 et le générateur 107. Selon une possibilité, la machine à absorption comprend également au moins une pompe à solution 106 et au moins deux vannes 103, 110 de détente. Ce type de machine fonctionne selon trois niveaux de température : un niveau de température basse correspondant à la production de froid à l'évaporateur 104, un niveau de température intermédiaire correspondant à la température de condensation du fluide frigorigène, mais également à celle d'absorption du fluide frigorigène par l'absorbant et un niveau de température élevé correspondant à la température motrice du générateur 107. Une machine à absorption fonctionne pour une part à haute pression entre la pompe 106 en amont du générateur 107 et le détendeur 103, en aval du condenseur 102, et pour une autre part à basse pression entre le détendeur 103, en aval du condenseur 102 et la pompe 106 en amont du générateur 107.

Ce cycle thermodynamique est réalisable en raison de l'écart de pression de vapeur entre l'absorbant et le fluide frigorigène qui est variable en fonction de la température et de la pression. Cette variabilité permet d'avoir un écart de concentration entre la solution pauvre et la solution riche décrites ci-après. L'avantage de ce cycle à absorption est que la compression mécanique est remplacée par une compression thermochimique qui utilise de la chaleur, c'est-à-dire une source d'énergie primaire dégradée. Le seul apport d'énergie primaire nécessaire se situe au niveau de la pompe 106, mais son travail est environ 96 fois inférieur au travail que le compresseur de vapeur doit fournir pour des conditions de fonctionnement similaires.

Selon l'invention, la machine à absorption comprend une solution de travail fluide frigorigène/absorbant comprenant le couple ammoniac /eau (NH₃/H₂O) ou encore le couple bromure de lithium/eau (LiBr/H₂O).

Ce couple est utilisable pour des applications de climatisation, mais aussi de réfrigération et il n'y a pas de cristallisation possible sur les plages de fonctionnement en pression et température. Par contre, pour ce couple, l'écart de pression de vapeur entre l'absorbant et le fluide frigorigène est faible. Il y a donc des traces d'eau emmenées avec la vapeur d'ammoniac en sortie du générateur nécessitant parfois la présence d'un rectifieur 101.

La solution de travail est dite riche, car la concentration en fluide frigorigène est plus importante que dans la solution de travail dite pauvre.

Une machine à absorption selon l'invention est décrite ci-après dont un exemple de réalisation est illustré à la figure 1.

Selon un mode de réalisation, la machine à absorption selon l'invention comprend un générateur 107 configuré pour vaporiser le fluide frigorigène. Le générateur 107 est connecté fluidiquement à l'absorbeur 105 et au condenseur 102. Le générateur 107 comprend une connexion fluidique avec l'absorbeur 105 permettant l'entrée de la solution de travail dite riche dans le générateur 107, préférentiellement directement. Selon un mode de réalisation, la machine à absorption comprend entre le générateur 107 et l'absorbeur 105, un économiseur 109, un détendeur 110 et une pompe 106. L'économiseur 109 et le détendeur 110 assurent la circulation de la solution de travail entre l'absorbeur 105 et le générateur 107 et inversement entre le générateur 107 et l'absorbeur 105 en générant la solution de travail dite pauvre et la solution de travail dite riche. Le générateur 107 comprend une connexion fluidique avec le condenseur 102 permettant la sortie de la vapeur de fluide frigorigène hors du générateur 107, préférentiellement directement sauf par exemple en présence d'un rectifieur 101 décrit ci-après. Le générateur 107 comprend également une entrée et une sortie de source de chaleur 1 permettant l'apport de chaleur nécessaire à la vaporisation du fluide frigorigène. Selon l'invention, la source de chaleur ou source chaude du générateur 107 provient, au moins partiellement, de l'énergie thermique stockée dans le module de stockage 1 et avantageusement issue du récupérateur de chaleur 207 de la machine à compression. Selon un mode de réalisation, la source chaude comprend une source de chaleur complémentaire 10 pouvant être issue d'énergie solaire ou d'énergie fatale de process industriels. La source de chaleur complémentaire 10 peut être utilisée directement pour apporter des calories au générateur 107 ou indirectement par échange préalable avec le module de stockage thermique 1.

Selon un mode de réalisation, la machine à absorption selon l'invention comprend un condenseur 102 configuré pour condenser la vapeur de fluide frigorigène. Le condenseur 102 est connecté fluidiquement au générateur 107 et à l'évaporateur 104. Le condenseur 102 comprend une connexion fluidique issue du générateur 107 permettant l'entrée de la vapeur de fluide frigorigène dans le condenseur 102, préférentiellement directement ou au travers d'un rectifieur 101. Le condenseur 102 comprend une connexion fluidique avec l'évaporateur 104, permettant la sortie du fluide frigorigène à l'état liquide, directement ou au travers d'un détendeur 103 destiné à amener le fluide frigorigène à sa pression d'évaporation, il abaisse la pression du fluide. Le condenseur 102 comprend également une source de chaleur secondaire telle qu'une circulation d'air 3 pour assurer son fonctionnement normal. Selon un mode de réalisation, la source de chaleur secondaire du condenseur 102 est le matériau de stockage thermique du module de stockage thermique 2 associé au condenseur 202 de la machine à compression. Le changement de phase du fluide frigorigène de l'état vapeur à l'état liquide s'accompagne d'une libération de chaleur qui est transmise au flux d'air circulant par exemple autour de tube, l'air réchauffé est évacué du système de production de froid, ou préférentiellement la libération de chaleur est transmise au matériau de stockage thermique circulant autour de tube du condenseur 102.

Avantageusement, la machine à absorption comprend un rectifieur 101 disposé entre le générateur 107 et le condenseur 102. Le rectifieur 101 permet d'enlever par condensation les traces d'eau entrainées avec le fluide réfrigérant en sortie du générateur 107 et assure ainsi le bon fonctionnement de la machine.

Avantageusement, la machine à absorption comprend un détendeur 103 agencé entre le condenseur 102 et l'évaporateur 104. Le détendeur 103 est configuré pour détendre le fluide frigorigène à l'état liquide issu du condenseur 102. Le détendeur 103 amène le fluide frigorigène à sa pression d'évaporation.

Avantageusement, la machine à absorption peut comprend un sous-refroidisseur 108 agencé entre le condenseur 102 et l'évaporateur 104. Le sous refroidisseur 108 permet de récupérer de l'énergie et donc de réduire la taille de du condenseur 102 et de l'évaporateur 104 et ainsi d'améliorer de manière notable les performances de la machine. La pertinence de ce composant est fonction des températures de fonctionnement, la taille de la machine et le coût des échangeurs.

La machine à absorption selon l'invention comprend un évaporateur 104 configuré pour vaporiser le fluide frigorigène et produire une énergie frigorifique. L'évaporateur 104 est connecté fluidiquement au condenseur 102 et à l'absorbeur 105. L'évaporateur 104 comprend une connexion fluidique issue du condenseur 102, plus précisément avec un détendeur 103, permettant l'entrée du fluide frigorigène à l'état liquide dans l'évaporateur 104, préférentiellement directement. L'évaporateur 104 comprend une connexion fluidique avec l'absorbeur 105, permettant la sortie de la vapeur de fluide frigorigène, préférentiellement directement ou au travers du sous-refroidisseur 108. L'évaporateur 104 comprend également une entrée d'une source de chaleur à refroidir et une sortie de la source de chaleur refroidie. Le changement de phase du fluide frigorigène de l'état liquide à de l'état vapeur s'accompagne d'une transmission de chaleur de la source chaude, ou de chaleur, à refroidir au fluide frigorigène. La source chaude à refroidir transmet des calories et voit ainsi sa température s'abaisser. Selon un mode de réalisation, la source chaude à refroidir est au moins partiellement un matériau de stockage thermique du module de stockage thermique 3 associé à l'évaporateur 204 de la machine à compression. Le matériau de stockage thermique est ensuite avantageusement utilisé pour refroidir un flux d'air pour une fonction de climatisation de bâtiment, de chambre froide.

La machine à absorption selon l'invention comprend un absorbeur 105 configuré pour condenser la vapeur de fluide frigorigène issue de l'évaporateur 104. L'absorbeur 105 est connecté fluidiquement à l'évaporateur 104 et au générateur 107. L'absorbeur 105 comprend une connexion fluidique issue de l'évaporateur 104 permettant l'entrée du fluide frigorigène à l'état de vapeur dans l'absorbeur 105, préférentiellement directement. L'absorbeur 105 comprend une connexion fluidique avec le générateur 107, plus précisément avec une pompe 106 destinée à mettre en circulation la solution de travail dans le circuit de circulation fluidique, plus précisément une solution de travail dite riche sort de l'absorbeur 105 en direction du générateur 107 par la connexion fluidique préférentiellement directement connectée à la pompe 106. Avantageusement, la pompe 106 est connectée fluidiquement, préférentiellement directement, à un économiseur 109 au travers duquel la solution de travail dite riche est réchauffée avant d'être transmise au générateur 107. Avantageusement, l'économiseur 109 est un échangeur transmettant de la chaleur de la solution dite pauvre issue du générateur 107 vers la solution dite riche issue de l'absorbeur 105. L'économiseur 109 permet une récupération d'énergie permettant de réduire la taille de l'absorbeur 105 et du générateur 107 et ainsi améliorer de manière notable les performances de la machine. Avantageusement, l'absorbeur 105 comprend une connexion fluidique avec le générateur 107, plus précisément avec un détendeur 110. La connexion fluidique permet l'entrée de la solution de travail dite pauvre issue du générateur 107 dans l'absorbeur 105, préférentiellement directement. Le changement de phase du fluide frigorigène de l'état vapeur à l'état liquide s'accompagne d'une libération de chaleur qui est transmise à une source de chaleur secondaire telle qu'un flux d'air 4 circulant par exemple autour de tubes. L'air réchauffé est évacué du système de climatisation. Selon un mode de réalisation, la source de chaleur secondaire est au moins partiellement, préférentiellement uniquement, un matériau de stockage thermique d'un module de stockage thermique 4 destiné à être stocké dans une cuve de stockage thermique.

La machine à absorption comprend un circuit fluidique à absorption 100 configuré pour assurer la connexion fluidique des différents composants de la machine à absorption. Le circuit fluidique à absorption 100 est un circuit fermé destiné à recevoir la solution de travail.

Le système de stockage thermique comprend au moins un module de stockage thermique 1, 2, 3, 4. Le au moins un module de stockage thermique comprend au moins un fluide frigorigène, une cuve de stockage thermique destinée à recevoir le fluide frigorigène, et un matériau de stockage thermique destiné à être stocké dans la cuve.

Selon un mode de réalisation préféré, le au moins un module de stockage thermique est un stockage de chaleur latente par Matériau à Changement de Phase (MCP). À titre d'exemple, un système de stockage thermique par MCP de type tube, lisse ou ailette, à calandre peut être utilisé. Le fluide frigorigène de la machine à compression circule dans un échangeur plongeant dans une cuve remplie de MCP.

Lorsque le système de production de froid comprend plusieurs modules de stockage 1, 2, 3, 4 avantageusement, tous les modules sont des modules de stockage de chaleur latente par MCP. Préférentiellement les modules de stockage 1, 2, 3, 4 sont distincts.

Dans une configuration selon l'invention, la machine à absorption et la machine à compression sont couplées par le système de stockage thermique. C'est-à-dire que la machine à absorption et la machine à compression utilisent un système de stockage thermique pour lier leur fonctionnement.

En particulier au niveau du générateur 107 de la machine à absorption qui est couplé avec le récupérateur de chaleur 207 de la machine à compression par un module de stockage thermique 1. Ce module de stockage thermique 1 est également dénommé premier module de stockage thermique 1, il assure avantageusement un stockage du matériau de stockage à une température d'environ 100°C.

Plus préférentiellement, le générateur 107 et le récupérateur de chaleur 207 sont configurés pour intégrer physiquement le module de stockage 1. De cette manière, le générateur 107 est au moins partiellement constitué par le module de stockage thermique 1. De même, le récupérateur 207 est au moins partiellement constitué par le module de stockage 1. Le générateur 107, le module de stockage 1 et le récupérateur de chaleur 207 sont intégrés les uns aux autres. Le premier échangeur thermique du module de stockage 1 forme au moins en partie le générateur 107. Le deuxième échangeur thermique du module de stockage 1 forme au moins en partie le récupérateur 207.

Ce module de stockage 1 permet de stocker l'énergie fatale de la machine à compression ou, éventuellement de manière alternative ou complémentaire, la chaleur source de chaleur complémentaire 10 pour pouvoir faire fonctionner la machine à absorption de sorte à augmenter la production de froid permettant de réduire la production de froid de la machine à compression si besoin.

Suivant le mode de réalisation utilisant un système de stockage de chaleur latente par MCP par exemple de type tube-calandre, le MCP est un matériau de stockage thermique échangeant avec un fluide caloporteur circulant entre la cuve de stockage et le générateur 107 et entre la cuve de stockage et le récupérateur de chaleur 207 et éventuellement entre une source de chaleur complémentaire 10 et la cuve. Le générateur 107, le récupérateur de chaleur 207 et éventuellement la source de chaleur complémentaire 10 sont agencés en parallèles sur un circuit de fluide caloporteur comprenant en outre avantageusement des moyens de régulation de la circulation du fluide caloporteur dans les différentes branches parallèles tels que des vannes et/ ou des pompes.

Selon une possibilité, au niveau du condenseur 102 de la machine à absorption qui est couplé avec le condenseur 202 de la machine à compression par un module de stockage thermique 2. Ce module de stockage thermique 2 est également dénommé deuxième module de stockage thermique 2, il assure avantageusement un stockage du matériau de stockage à une température d'environ 30°C. Ce module de stockage 3 permet de réguler les surplus d'énergie pour maintenir un point de fonctionnement stable de la machine à compression et/ou de la machine à absorption. Plus préférentiellement, le condenseur 102 et le condenseur 202 sont configurés pour intégrer physiquement le module de stockage 2. De cette manière, le condenseur 102 est au moins partiellement constitué par le module de stockage thermique 2. De même, le condenseur 202 est au moins partiellement constitué par le module de stockage 2. Le condenseur 102, le module de stockage 2 et le condenseur 202 sont intégrés les uns aux autres. Le premier échangeur thermique du module de stockage 2 forme au moins en partie le condenseur 102. Le deuxième échangeur thermique du module de stockage 2 forme au moins en partie le condenseur 202.

Selon une possibilité, au niveau de l'évaporateur 104 de la machine à absorption qui est couplé avec l'évaporateur 204 de la machine à compression par un module de stockage thermique 3. Ce module de stockage thermique 3 est également dénommé troisième module de stockage thermique 3, il assure avantageusement un stockage du matériau de stockage à une température d'environ -9°C. Ce module de stockage stocke le froid produit par la machine à absorption pour stabiliser la production de froid de la machine à compression voir de la réduire. Plus préférentiellement, l'évaporateur 104 et l'évaporateur 204 sont configurés pour intégrer physiquement le module de stockage 3. De cette manière, l'évaporateur 104 est au moins partiellement constitué par le module de stockage thermique 3. De même, l'évaporateur 204 est au moins partiellement constitué par le module de stockage 3. L'évaporateur 104, le module de stockage 3 et l'évaporateur 204 sont intégrés les uns aux autres. Le premier échangeur thermique du module de stockage 3 forme au moins en partie l'évaporateur 104. Le deuxième échangeur thermique du module de stockage 3 forme au moins en partie l'évaporateur 204.

Selon une possibilité, l'absorbeur 105 de la machine à absorption est associé à un module de stockage thermique 4. Ce module de stockage thermique 4 est également dénommé quatrième module de stockage thermique, il assure avantageusement un stockage du matériau de stockage à une température d'environ 30°C et permet de réguler les surplus d'énergie pour maintenir un point de fonctionnement stable de la machine à compression et/ou de la machine à absorption. Plus préférentiellement, l'absorbeur 105 est configuré pour intégrer physiquement le module de stockage 4. De cette manière, l'absorbeur 105 est au moins partiellement constitué par le module de stockage thermique 4. Lle module de stockage 4 et l'absorbeur 205 sont intégrés l'un à l'autre. Le premier échangeur thermique du module de stockage 4 forme au moins en partie l'absorbeur 105.

La dénomination deuxième troisième quatrième n'implique pas la présence obligatoire des modules précédents ou suivants.

Selon un mode de réalisation avantageux de l'invention, le fonctionnement du système de production de froid comprend un module de contrôle et de commande de la machine à compression, de la machine à absorption et du système de stockage thermique. Le module de contrôle et de commande comprend préférentiellement des capteurs de température agencés au niveau du fluide à refroidir tels que de l'eau ou de l'air. Avantageusement, le module de contrôle et de commande comprend un moyen de définition d'une température de consigne pour le fluide à refroidir. Le module de contrôle et de commande suit la température du fluide à refroidir par rapport à la température de consigne de sorte à adapter le fonctionnement du système de production de froid et en particulier le fonctionnement de la machine à compression et de la machine à absorption.

À titre d'exemple non limitatif, un mode de réalisation de contrôle et de commande du système de production de froid est donné si après. Un procédé de production de froid par un système selon l'invention est défini par la revendication indépendante 12.

Par exemple, le fonctionnement du système de production de froid est fonction du prix de l'énergie primaire telle que l'électricité nécessaire au fonctionnement de la machine à compression.

Lorsque le module de contrôle et de commande identifie un besoin de froid, car la température du fluide à refroidir est supérieure à la température de consigne, il identifie le coût de l'énergie primaire.

En cas de faible coût, type tarification heure creuse, le module de contrôle et de commande met en marche la machine à compression générant la production de chaleur à l'issue du compresseur 203 et la production de froid au niveau de l'évaporateur 204. La chaleur est récupérée par le récupérateur de chaleur 207 et est stockée dans le module de stockage thermique 1 de sorte à alimenter la machine à absorption. Le module de contrôle et de commande mets en marche la machine à absorption, avantageusement lorsque l'énergie thermique stockée dans le module de stockage thermique 1 a atteint un seuil prédéfini tel une température minimale par exemple de 100°C. La machine à absorption contribue également à la production de froid. Le froid de la machine à compression et le froid de la machine à absorption sont utilisés pour refroidir le fluide à refroidir. Lorsque la température du fluide à refroidir tombe en dessous de la température de consigne, le module de contrôle et de commande décide avantageusement de réduire voir arrêter la machine à compression et de poursuivre le fonctionnement de la machine à absorption jusqu'à ce que la quantité d'énergie thermique stockée dans le module de stockage thermique 1 tombe en dessous d'une valeur de consigne, tel que par exemple en dessous d'une température de 100°C. Le froid qui est produit par la machine à absorption non nécessaire au refroidissement du fluide à refroidir est stocké dans un module de stockage thermique 3.

En cas de coût élevé, type tarification heure pleine, le module de contrôle et de commande contrôle si du froid est stocké dans le module de stockage thermique 3 associé aux évaporateurs 104-204. Si le module de stockage thermique 3 comprend du froid, le module de contrôle et de commande commande le déstockage de ce froid vers le fluide à refroidir. Si le fluide à refroidir est suffisamment refroidi, c'est dire qu'il présente une température inférieure à la température de consigne, alors le module de contrôle et de commande stoppe le déstockage de froid. Si le module de contrôle et de commande identifie encore un besoin de froid alors que le module de stockage thermique ne comprend plus de froid, le module de contrôle et de commande démarre la machine à compression de sorte à générer rapidement du froid et refroidir le fluide à refroidir. Comme décrit ci-dessus, la machine à compression génère de la chaleur et du froid. Le froid est utilisé pour refroidir le fluide à refroidir et la chaleur est récupérée par le récupérateur de chaleur 207 puis stockée dans le module de stockage thermique 1 dès que le module de stockage thermique 1 contient suffisamment d'énergie thermique, le module de contrôle et de commande démarre la machine à absorption qui vient compléter voir prendre le relais de la production de froid. Dès que le fluide à refroidir atteint la valeur de consigne, le module de contrôle et de commande arrête la machine à absorption.

A titre d'exemple des valeurs de températures du fluide réfrigérant de la machine à compression ou du fluide de travail de la machine à absorption sont données ci-après :

**Tableau 1**

| Points | Températures °C |
|---|---|
| A | 120 |
| B | 98,4 |
| C | 98,4 |
| D | 76,5 |
| E | 31,6 |
| F | -12,5 |
| G | -9 |
| H | 16,5 |
| I | 33,3 |
| J | 82,9 |
| K | 98,4 |
| L | 44,4 |

### REFERENCES

1.Module de stockage
2.Module de stockage
3.Module de stockage
4.Module de stockage
10. Source de chaleur complémentaire
100. Circuit fluidique d'absorption
101.Rectifieur
102. Condenseur
103.Détendeur
104.Evaporateur
105.Absorbeur
106.Pompe
107.Générateur
108. Sous -refroidisseur
109. Economiseur
110. Détendeur
200.Circuit fluidique de compression
201.Détendeur
202. Condenseur
203.Compresseur
204.Evaporateur
207. Récupérateur de chaleur

## Revendications

1. Système de production de froid comprenant une machine à compression mécanique pour la production de froid comprenant un compresseur mécanique (203), un récupérateur de chaleur (207), un condenseur (202), un détendeur (201), un évaporateur (204) et un circuit fluidique de compression (200) apte à recevoir un fluide réfrigérant, **caractérisé en ce qu'**il comprend
- une machine à absorption pour la production de froid comprenant un absorbeur (105), un générateur (107), un condenseur (102), un évaporateur (104) et un circuit fluidique d'absorption (100) apte à recevoir une solution de travail comprenant un fluide frigorigène et un absorbant, et
- un système de stockage thermique destiné à coupler la machine à absorption et la machine à compression comprenant un premier module de stockage thermique (1) comprenant une cuve de stockage thermique constituant un volume de stockage et un matériau de stockage thermique destiné à être stocké dans la cuve et agencé entre le générateur (107) de la machine à absorption et le récupérateur de chaleur (207) de la machine à compression mécanique de sorte que le module de stockage constitue au moins partiellement une source de chaleur du générateur (207) de la machine à absorption.

2. Système selon la revendication précédente dans lequel le système de stockage thermique comprend un module de stockage thermique (3) comprenant un volume de stockage apte à recevoir et à stocker un matériau de stockage thermique et agencé entre l'évaporateur (104) de la machine à absorption et l'évaporateur (204) de la machine à compression mécanique de sorte à mutualiser au moins partiellement le stockage de froid.

3. Système selon l'une quelconque des revendications précédentes dans lequel le fluide réfrigérant est distinct de la solution de travail, le circuit de circulation fluidique d'absorption (100) et le circuit de circulation fluidique de compression (200) sont des circuits fermés distincts.

4. Système selon l'une quelconque des revendications précédentes dans lequel le système de stockage thermique comprend un module de stockage thermique (2) comprenant un volume de stockage apte à recevoir et à stocker un matériau de stockage thermique et agencé entre le condenseur (102) de la machine à absorption et le condenseur (202) de la machine à compression.

5. Système selon l'une quelconque des revendications précédentes dans lequel le système de stockage thermique comprend un module de stockage thermique (4) comprenant un volume de stockage apte à recevoir et à stocker un matériau de stockage thermique et agencé au niveau de l'absorbeur (105) de la machine à absorption.

6. Système selon l'une quelconque des revendications précédentes dans lequel le matériau de stockage d'au moins un module de stockage thermique (1, 2, 3, 4) est un matériau à changement de phase.

7. Système selon l'une quelconque des revendications précédentes dans lequel le module de stockage thermique (1) (2) (3) (4) comprend un premier échangeur thermique agencé dans le volume de stockage est destiné à recevoir le fluide frigorigène ou la solution de travail de la machine à absorption.

8. Système selon l'une quelconque des revendications précédentes dans lequel le module de stockage thermique (1) (2) (3) (4) comprend un deuxième échangeur thermique agencé dans le volume de stockage est destiné à recevoir le fluide réfrigérant de la machine à compression.

9. Système selon l'une quelconque des revendications précédentes comprenant une source de chaleur complémentaire (10) fournissant au moins partiellement de l'énergie thermique au premier module de stockage (1).

10. Système selon la revendication précédente dans lequel la source de chaleur complémentaire (10) est une source solaire ou une source de chaleur fatale.

11. Système selon l'une quelconque des deux revendications précédentes dans lequel le module de stockage thermique (1) comprend un échangeur thermique complémentaire agencé dans le volume de stockage est destiné à recevoir la source de chaleur complémentaire.

12. Procédé de production de froid par un système selon l'une quelconque des revendications précédentes comprenant une production de froid par la machine à compression, une production de chaleur fatale par la machine à compression, **caractérisé en ce qu'**il comprend un stockage de la chaleur fatale de la machine à compression par un module de stockage thermique (1) et une production de froid par la machine à absorption par déstockage du module de stockage thermique (1) stockant la chaleur fatale de la machine à compression vers le générateur (107) de la machine à absorption.

13. Procédé de production de froid selon la revendication précédente comprenant un stockage mutualisé de la production de froid de la machine à compression et de la production de froid de la machine à absorption par un module de stockage thermique (3).

## Patentansprüche

1. Kälteerzeugungssystem, umfassend eine mechanische Kompressionsmaschine zur Erzeugung von Kälte, umfassend einen mechanischen Kompressor (203), eine Wärmerückgewinnungseinheit (207), einen Kondensator (202), einen Druckminderer (201), einen Verdampfer (204) und einen Kompressionsfluidkreis (200), der imstande ist, ein Kältemittel aufzunehmen, **dadurch gekennzeichnet, dass** es umfasst
- eine Absorptionsmaschine zur Erzeugung von Kälte, umfassend einen Absorber (105), einen Generator (107), einen Kondensator (102), einen Verdampfer (104) und einen Absorptionsfluidkreis (100), der imstande ist, eine Arbeitslösung aufzunehmen, die ein Kältemittel und ein Absorptionsmittel umfasst, und
- ein thermisches Speichersystem, das dazu bestimmt ist, die Absorptionsmaschine und die Kompressionsmaschine zu koppeln, umfassend ein erstes thermisches Speichermodul (1), das einen thermischen Speichertank umfasst, der ein Speichervolumen darstellt, und ein thermisches Speichermaterial, das dazu bestimmt ist, in dem Tank gespeichert zu werden, und derart zwischen dem Generator (107) der Absorptionsmaschine und der Wärmerückgewinnungseinheit (207) der mechanischen Kompressionsmaschine angeordnet ist, dass das Speichermodul mindestens teilweise eine Wärmequelle des Generators (207) der Absorptionsmaschine darstellt.

2. System nach dem vorstehenden Anspruch, wobei das thermische Speichersystem ein thermisches Speichermodul (3) umfasst, das ein Speichervolumen umfasst, das imstande ist, ein thermisches Speichermaterial aufzunehmen und zu speichern, und zwischen dem Verdampfer (104) der Absorptionsmaschine und dem Verdampfer (204) der mechanischen Kompressionsmaschine angeordnet ist, um die Kältespeicherung mindestens teilweise gemeinsam zu nutzen.

3. System nach einem der vorstehenden Ansprüche, wobei sich das Kältemittel von der Arbeitslösung unterscheidet, der Absorptionsfluidzirkulationskreis (100) und der Kompressionsfluidzirkulationskreis (200) unterschiedliche geschlossene Kreise sind.

4. System nach einem der vorstehenden Ansprüche, wobei das thermische Speichersystem ein thermisches Speichermodul (2) umfasst, das ein Speichervolumen umfasst, das imstande ist, ein thermisches Speichermaterial aufzunehmen und zu speichern, und zwischen dem Kondensator (102) der Absorptionsmaschine und dem Kondensator (202) der Kompressionsmaschine angeordnet ist.

5. System nach einem der vorstehenden Ansprüche, wobei das thermische Speichersystem ein thermisches Speichermodul (4) umfasst, das ein Speichervolumen umfasst, das imstande ist, ein thermisches Speichermaterial aufzunehmen und zu speichern, und im Bereich des Absorbers (105) der Absorptionsmaschine angeordnet ist.

6. System nach einem der vorstehenden Ansprüche, wobei das Speichermaterial mindestens eines thermischen Speichermoduls (1, 2, 3, 4) ein Phasenwechselmaterial ist.

7. System nach einem der vorstehenden Ansprüche, wobei das thermische Speichermodul (1) (2) (3) (4) einen ersten Wärmeaustauscher umfasst, der in dem Speichervolumen angeordnet ist und dazu bestimmt ist, das Kältemittel oder die Arbeitslösung der Absorptionsmaschine aufzunehmen.

8. System nach einem der vorstehenden Ansprüche, wobei das thermische Speichermodul (1) (2) (3) (4) einen zweiten Wärmeaustauscher umfasst, der in dem Speichervolumen angeordnet ist, und dazu bestimmt ist, das Kältemittel der Kompressionsmaschine aufzunehmen.

9. System nach einem der vorstehenden Ansprüche, umfassend eine ergänzende Wärmequelle (10), die dem ersten Speichermodul (1) mindestens teilweise thermische Energie zuführt.

10. System nach dem vorstehenden Anspruch, wobei die ergänzende Wärmequelle (10) eine Solarquelle oder eine Abwärmequelle ist.

11. System nach einem der beiden vorstehenden Ansprüche, wobei das thermische Speichermodul (1) einen ergänzenden Wärmeaustauscher umfasst, der in dem Speichervolumen angeordnet ist, dazu bestimmt ist, die ergänzende Wärmequelle aufzunehmen.

12. Kälteerzeugungsverfahren durch ein System nach einem der vorstehenden Ansprüche, umfassend eine Erzeugung von Kälte durch die Kompressionsmaschine, eine Erzeugung von Abwärme durch die Kompressionsmaschine, **dadurch gekennzeichnet, dass** es eine Speicherung der Abwärme aus der Kompressionsmaschine durch ein thermisches Speichermodul (1) umfasst, und eine Erzeugung von Kälte durch die Absorptionsmaschine durch Abführen des thermischen Speichermoduls (1), das die Abwärme der Kompressionsmaschine speichert, zum Generator (107) der Absorptionsmaschine.

13. Kälteerzeugungsverfahren nach dem vorstehenden Anspruch, umfassend eine gemeinsam genutzte Speicherung der Kälteerzeugung der Kompressionsmaschine und der Kälteerzeugung der Absorptionsmaschine durch ein thermisches Speichermodul (3).

## Claims

1. A cold production system comprising a mechanical compression machine for cold production comprising a mechanical compressor (203), a heat recovery unit (207), a condenser (202), an expansion valve (201), an evaporator (204) and a fluidic compression circuit (200) capable of receiving a coolant, **characterised in that** it comprises
- an absorption machine for cold production comprising an absorber (105), a generator (107), a condenser (102), an evaporator (104) and a fluidic absorption circuit (100) capable of receiving a work solution comprising a refrigerant and an absorbent, and
- a heat storage system for coupling the absorption machine and the compression machine comprising a first heat storage module (1) comprising a heat storage tank making up a storage volume and a heat storage material for being stored in the tank and arranged between the generator (107) of the absorption machine and the heat recovery unit (207) of the mechanical compression machine so that the storage module at least partially makes up a heat source of the generator (207) of the absorption machine.

2. The system according to the preceding claim, wherein the heat storage system comprises a heat storage module (3) comprising a storage volume capable of receiving and storing a heat storage material and arranged between the evaporator (104) of the absorption machine and the evaporator (204) of the mechanical compression machine so as to at least partially mutualise cold storage.

3. The system according to any of the preceding claims, wherein the coolant is distinct from the work solution, the fluidic circulation absorption circuit (100) and the fluidic circulation compression circuit (200) are distinct closed circuits.

4. The system according to any of the preceding claims, wherein the heat storage system comprises a heat storage module (2) comprising a storage volume capable of receiving and storing a heat storage material and arranged between the condenser (102) of the absorption machine and the condenser (202) of the compression machine.

5. The system according to any of the preceding claims, wherein the heat storage system comprises a heat storage module (4) comprising a storage volume capable of receiving and storing a heat storage material and arranged at the absorber (105) of the absorption machine.

6. The system according to any of the preceding claims, wherein the storage material of at least one heat storage module (1, 2, 3, 4) is a phase change material.

7. The system according to any of the preceding claims, wherein the heat storage module (1), (2), (3), (4) comprises a first heat exchanger arranged in the storage volume and for receiving a refrigerant or the work solution of the absorption machine.

8. The system according to any of the preceding claims, wherein the heat storage module (1), (2), (3), (4) comprises a second heat exchanger arranged in the storage volume and for receiving a coolant of the compression machine.

9. The system according to any of the preceding claims, comprising a complementary heat source (10) at least partially providing heat energy to the first storage module (1).

10. The system according to the preceding claim, wherein the complementary heat source (10) is a solar source or a fortuitous heat source.

11. The system according to any of the two preceding claims, wherein the heat storage module (1) comprises a complementary heat exchanger arranged in the storage volume and is for receiving the complementary heat source.

12. A cold production method by a system according to any of the preceding claims comprising producing cold by the compression machine, producing fortuitous heat by the compression machine, **characterised in that** it comprises storing fortuitous heat of the compression machine by a heat storage module (1) and producing cold by the absorption machine by discharging the heat storage module (1) storing fortuitous heat from the compression machine to the generator (107) of the absorption machine.

13. The cold production method according to the preceding claim, comprising storing cold production of the compression machine and cold production of the absorption machine by a heat storage module (3) in a mutualised manner.
